# EUROPÄISCHE PATENTSCHRIFT

(11) **EP 3 115 663 B1**
(45) Veröffentlichungstag und Bekanntmachung des Hinweises auf die Patenterteilung: **06.06.2018**
(21) Anmeldenummer: 16178086.1
(22) Anmeldetag: 06.07.2016
(51) Int. Cl.: F16K 27/04, F15B 21/04

(54) **SIEB FÜR EIN HYDRAULIKVENTIL UND HYDRAULIKVENTIL**
SIEVE FOR A HYDRAULIC VALVE, AND HYDRAULIC VALVE
CRIBLE DE SOUPAPE HYDRAULIQUE ET SOUPAPE HYDRAULIQUE

(30) Priorität: 10.07.2015 DE 102015111221
(43) Veröffentlichungstag der Anmeldung: 11.01.2017
(73) Patentinhaber: Hilite Germany GmbH, 97828 Marktheidenfeld (DE)
(72) Erfinder: Bierkoch, Michael, 72622 Nürtingen (DE); Jacob, Thomas, 70199 Stuttgart (DE); Peiler, Jürgen, 72644 Oberboihingen (DE)

(56) Entgegenhaltungen:
- WO-A1-91/08338
- WO-A1-93/07334
- WO-A1-2012/116758
- DE-A1-102013 217 984
- FR-A1- 2 843 426
- JP-A- 2006 022 816
- US-A1- 2004 182 450
- US-A1- 2008 035 554
- US-A1- 2013 061 959
- US-A1- 2015 129 059

## Beschreibung

### Technisches Gebiet

Die Erfindung betrifft ein Sieb für ein Hydraulikventil sowie ein Hydraulikventil.

### Stand der Technik

Zur Sicherstellung der Funktion von hydraulischen Ventilen beispielsweise in mechatronischen Getriebesteuerungen ist es grundsätzlich notwendig, Verschmutzungen zur Gewährleistung der Ventilfunktionen vom Ventil fernzuhalten. Insbesondere große Partikel können aufgrund der geringen Arbeitsspalte und Laufspiele zur Beeinträchtigung der Ventilfunktion oder zum Ausfall durch Blockieren führen. Durch ein entsprechendes im Ventil integriertes Grobschmutzsieb kann das zielführend verhindert werden.
Hierbei kommen unterschiedliche Siebe zur Anwendung. Hauptsächlich werden radial umschlingende Clip- oder Bandsiebe in verschiedenen Ausführungen eingesetzt. Clipsiebe, wie sie beispielsweise aus der DE 10 2007 050 447 A1 bekannt sind, werden mit eingespritztem Drahtgewebe ausgeführt.

Insbesondere das eingespritzte Drahtgewebe kann bei hohen Volumenströme, welche mit einer entsprechenden Geschwindigkeit bzw. unter einem entsprechenden Druck auf das Drahtgewebe auftreffen, beschädigt werden.

Aus der US 2015/0129059 A1 ist ein gattungsgemäßes Hydraulikventil bekannt, dessen Anschlüsse mittels Siebelementen vor Verunreinigungen geschützt sind. Die Siebelemente sind bandförmig ausgebildet und weisen beispielsweise durch ein Ätzverfahren hergestellte, bohrungsförmige Sieböffnungen auf. Enden der Siebelemente sind miteinander verschweißt.

Der US 2004/0182450 A1 ist ebenfalls ein Hydraulikventil mit bandförmigen Siebelementen zu entnehmen, welche mittels eines Federringes in der Ventilbuchse befestigt sind.

Aus der US 2013/0061959 A1 ist weiter ein Hydraulikventil bekannt, dessen Anschlüsse auf einer Innenseite der Ventilbuchse mittels Siebelementen mit Sieböffnungen geschützt sind.

Der DE 102013 21:7 984 A1 ist ferner ein Hydraulikventil mit einem Bandbauteil zu entnehmen, welches Filter- und Ventilbereiche aufweist. Die beiden Bereiche überdecken sich nach der Montage des Bandbauteils. Löcher, welche die Filterbereiche bilden, sind mittels eines Ätzprozesses hergestellt.

Der Offenlegung JP 2006 022816 A sind Hydraulikventile einem Bandfilter-Sieb sowie ein Clipfilter zu entnehmen.

Die WO 2012/116758 A1 offenbart einen Späneförderer zum Fördern von Scheidspänen, die im Betrieb von Werkzeugmaschinen hergestellt werden. Mittels des Späneförderes werden die Schneidspäne aus einem Kühlmittel entfernt, das in Werkzeugmaschinen während der Metallbearbeitung verwendet wird. Eine in dem Späneförderer angeordnete Filterplatte weist profilierte Öffnungen auf, um ein Reinigen der Filterplatte und ein Abtransport der Späne zu erleichtern.

### Offenbarung der Erfindung

Eine Aufgabe der Erfindung ist es, ein Hydraulikventil mit einem Sieb zu schaffen, welches eine hohe Robustheit gegenüber Druckpulsationen und Druckstößen in hydraulischen Systemen aufweist und gleichzeitig an spezielle Funktionsanforderungen des Hydraulikventils anpassbar ist.

Die vorgenannte Aufgabe wird gelöst mit den Merkmalen des unabhängigen Anspruchs 1.

Das erfindungsgemäße Hydraulikventil umfasst ein Bandblech mit Sieböffnungen, wobei die Sieböffnungen geätzte Funktionskonturen bilden. Durch das Herstellungsverfahren Ätzen können die Geometrien der Sieböffnung entsprechend den speziellen Funktionsanforderungen des jeweiligen Hydraulikventils gezielt dargestellt und optimiert werden. Das geätzte Sieb weist eine hohe Robustheit auf. Ferner können variable hydraulische Funktionskonturen einfach und reproduzierbar in unterschiedlichen Blechdicken vorgesehen werden. Zudem können die Funktionsgeometrien durch Berechnung- und Simulationsverfahren ist in einfacher Weise aufeinander abgestimmt werden.
Die Sieböffnungen sind erfindungsgemäß durch ein- oder beidseitiges Ätzen des Bandbleches ausgebildet vorgesehen. Insbesondere das beidseitige Ätzen erhöht die Variabilität der Funktionskonturen. Weiter sind die Sieböffnungen als Blenden ein- oder beidseitig kugelsegmentförmig ausgebildet, wobei der kleinste Durchmesser der Sieböffnungen einen Blendendurchmesser bildet. Die Blendenfunktion ermöglicht einen temperaturunabhängigen und gezielten Druckabfall bei der Durchströmung des Siebes. Dabei können die Sieblöcher vorzugsweise beidseitig kugelsegmentförmig ausgebildet und eine axiale Position der Blende variabel sein.

Die Sieböffnungen können weiter vorzugsweise als Schmutzbarriere ausgebildet sein. Dies wird insbesondere dadurch erreicht, dass die Kugelsegmente unterschiedlich groß ausgebildet sind, so dass die Blende nicht in der Mitte des Bandbleches angeordnet ist.

Sind die Sieböffnungen beidseitig als Kugelsegmente ausgebildet und Mittelachsen der Kugelsegmente zueinander versetzt vorgesehen, kann neben der Blendenwirkung auch eine gezielte Strömungsleitung, beispielsweise zur Vermeidung von Staudrücken, zur gerichteten Anströmung von Funktionsflächen anderer Komponenten etc. erzielt werden.

Eine einfache und kostengünstige Ausgestaltung kann dadurch erzielt werden, dass das Bandblech als Bandsieb ausgebildet ist. Dabei können Enden des Bandbleches vorzugsweise miteinander verschweißt vorgesehen sein.

Alternativ kann das Bandblech in einem Trägerrahmen angeordnet sein. Der Trägerrahmen kann in diesem Fall als Clip dienen.

Das erfindungsgemäße Hydraulikventil kann beispielsweise als Getriebeventil oder als Steuerventil für einen Nockenwellenversteller eingesetzt werden.

Günstige Ausgestaltungen und Vorteile der Erfindung ergeben sich aus den weiteren Ansprüchen, der Beschreibung und der Zeichnung.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Ausschnitt eines Siebes eines erfindungsgemäßen Hydraulikventils im Längsschnitt;
- Fig. 2: eine Draufsicht des Ausschnittes gemäß Fig. 1;
- Fig. 3: einen Ausschnitt eines zweiten Ausführungsbeispiels eines Siebes im Längsschnitt;
- Fig. 4: eine Draufsicht des Ausschnittes gemäß Fig. 3;
- Fig. 5: einen Ausschnitt eines dritten Ausführungsbeispiels eines Siebes im Längsschnitt;
- Fig. 6: eine Draufsicht des Ausschnittes gemäß Fig. 5;
- Fig. 7: einen Ausschnitt eines vierten Ausführungsbeispiels eines Siebes im Längsschnitt;
- Fig. 8: eine Draufsicht des Ausschnittes gemäß Fig. 7;
- Fig. 9: einen Ausschnitt eines fünften Ausführungsbeispiels eines Siebes im Längsschnitt;
- Fig. 10: eine Draufsicht des Ausschnittes gemäß Fig. 9;
- Fig. 11: ein Sieb als Clipsieb und
- Fig. 12: das erfindungsgemäße Hydraulikventil mit einem Sieb.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

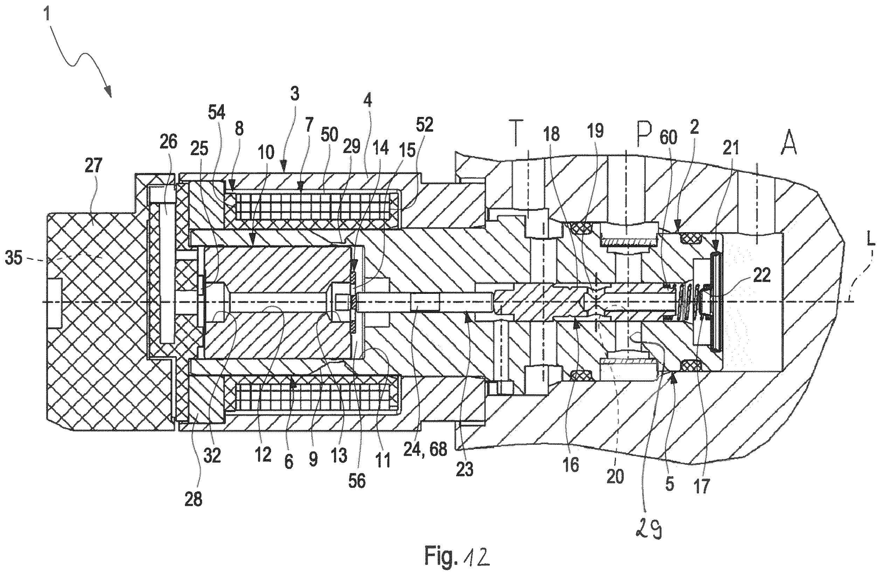

Fig. 12 zeigt eine bespielhafte Verwendung eines, im nachfolgenden detaillierter beschriebenen Siebes 100 in einem erfindungsgemäßen Hydraulikventil 1, das als Getriebeventil einer mechatronischen Getriebesteuerung vorgesehen sein kann.

Das in Fig. 12 im Längsschnitt gezeigte Hydraulikventil 1 findet beispielsweise Einsatz in einem Doppelkupplungsgetriebe. Dazu sind Ventilbuchsen 5 von Hydraulikteilen 2 mehrerer in Teilen ähnlich aufgebauter Hydraulikventile in eine Steuerplatte des Doppelkupplungsgetriebes eingesetzt. Die Ventilbuchsen 5 sind als Drehteile ausgeführt. Mit den Hydraulikteilen 2 jeweils verbundene Elektromagnetteile 3 der Getriebeventile 1 ragen aus der Steuerplatte heraus und sind von Hydraulikfluid umspült. Jedes der Elektromagnetteile 3 weist ein magnetisierbares Gehäuse 4 auf.

Das Hydraulikventil 1 umfasst das Elektromagnetteil 3 mit dem magnetisierbaren Gehäuse 4, welches eine Magnetspule 7 an einem Außenumfang 50 und an wenigstens einer ersten Stirnseite 52 umschließt, sowie mit einem im Inneren der Magnetspule 7 angeordneten Polrohr 6, in welchem ein Anker 10 in einem Ankerraum 56 axial verschieblich vorgesehen ist. Weiter umfasst das Hydraulikventil 1 das Hydraulikteil 2 mit einem Hydraulikkolben 16, welcher axial verschieblich in der Ventilbuchse 5 geführt wird und mittels welchem wenigstens ein Arbeitsanschluss A wahlweise mit einem Versorgungsanschlüss P und einem Tankanschluss T verbindbar ist. Der Anker 10 ist zum Antrieb des Hydraulikkolbens 16 vorgesehen. Die Ventilbuchse 5 ist entlang einer Längsachse L in Verlängerung des Polrohrs 6 angeordnet. Die Magnetspule 7 wird in einem Spulenkörper 8 eingebettet in das Gehäuse 4 beispielsweise mittels Presssitz aufgenommen. Alternativ kann die Magnetspule 7 auch mit Kunststoff-Material des Spulenkörpers 8 umspritzt sein.

Wie aus Fig. 12 ersichtlich ist, ist die Ventilbuchse 5 einteilig mit dem Polrohr 6 ausgebildet vorgesehen, so dass das Hydraulikventil 1 weniger Bauteile aufweist und der Montageprozess vereinfacht werden kann. Durch die Koaxialität von Polrohr 6 und Ventilbuchse 5 lässt sich auch eine große Eintauchtiefe des Ankers 10 in die Magnetspule 7 des Elektromagnetteils 3 konstruktiv einfacher umsetzen, wodurch ein günstiger und effektiver Betrieb des Hydraulikventils 1 gewährleistet werden kann. Damit wird die Funktionsweise des gesamten Hydraulikventils 1 verbessert.

Die vorteilhafte Ausgestaltung der Koaxialität von Polrohr 6 und Ventilbuchse 5 begünstigt weiter eine Reduzierung der magnetischen Querkräfte auf den Anker 10, da eine möglichst genaue Ausrichtung des Ankerlaufs in der Achse der Magnetspule 7 durch eine einteilige Ausführung von Polrohr 6 und Ventilbuchse 5 einfacher zu erreichen ist.

Das Polrohr 6 weist zur günstigen Beeinflussung des magnetischen Flusses eine beispielsweise V-förmige Ausnehmung 9 auf.

Der Anker 10 ist in einer den Ankerraum 56 bildenden Ausnehmung 11 des Polrohrs 6 axial verschieblich vorgesehen und weist einen zentralen Anal 12 auf, der als Bohrung ausgeführt ist. Dieser zentrale Kanal 12 ist mit einem Absatz am vorderen Ende des Ankers 10 zu einer Ausnehmung 13 größeren Durchmessers erweitert, die ebenfalls als Bohrung ausgeführt ist. In diese größere Ausnehmung 13 ist eine Antiklebscheibe 14 eingesetzt, die eine oder mehrere exzentrisch zur Längsachse L angeordnete kleine Drosselblendenöffnungen 15 aufweist, welche den Ankerraum mit dem zentralen Kanal 12 verbinden. Die Antiklebscheibe 14 verhindert ein Kleben des Ankers 10 an der magnetisch leitenden Ventilbuchse 5 des Hydraulikteils 2 bei einem voll ausgerückten Anker 10.

Der Hydraulikteil 2 weist den Hydraulikkolben 16 auf, der axial verschiebbar in der Ventilbuchse 5 geführt ist. Der Hydraulikkolben 16 ist an einem dem Anker 10 abgewandten Ende 60 mittels eines Federelements 17 an der Ventilbuchse 5 abgestützt angeordnet. Dabei ist der Hydraulikkolben 16 gegen die Kraft des als Schraubendruckfeder ausgebildeten Federelements 17 verschiebbar, das sich an einem, in der Ventilbuchse 5 befestigten Sieb 21 abstützt. Zur Führung und Zentrierung der Schraubendruckfeder 17 weist das Sieb 21 eine Federführung 22 auf. Je nach Stellung des Hydraulikkolbens 16 ist der Arbeitsanschluss A mittels einer umlaufenden Ringnut 18 und Längs- und Querbohrungen 20, 19 im Hydraulikkolben 16 mit dem Versorgungsanschluss P oder dem Tankanschluss T verbindbar.

Befindet sich der Hydraulikkolben 16 mangels Anlegen einer ausreichend großen Spannung an die Magnetspule 7 in der gezeigten Grundstellung, so wird das Hydraulikfluid vom Arbeitsanschluss A auf den Tankabfluss T geführt.

Die axiale Kraftübertragung zwischen dem Anker 10 und dem Hydraulikkolben 16 erfolgt mittels eines Pins 23, welcher in der Ventilbuchse 5 geführt angeordnet ist. Der Pin 23 ermöglicht eine Entkopplung zwischen Anker- und Kolbenlagerung. Eine an seinem Umfang umlaufende Ausnehmung 24, welche als am Umfang umlaufende Ringnut 68 ausgebildet ist, ermöglicht dabei eine Verringerung der Auflagefläche, wodurch die Reibung reduziert werden kann. Gleichzeitig werden vorteilhafterweise nur axiale Kräfte durch den Pin 23 übertragen und die Toleranzsituation ist zudem erheblich verbessert. Für eine möglichst reibungsfreie Kraftübertragung weisen der Hydraulikkolben 16 und die Antiklebescheibe 14 Kugelkuppen auf. Um diese beiden Bauteile zu vereinfachen, ist es alternativ denkbar, eine auflageflächenreduzierende Struktur, vorzugsweise gerundete Stirnflächen, insbesondere Kugejkuppen, an dem Pin 23 auszubilden.

Wie Fig. 12 weiter zu entnehmen ist, ist eine Polscheibe 28 in den Spulenkörper 8 integriert vorgesehen, indem sie beispielsweise von dem Kunststoff-Material des Spulenkörpers 8 zumindest teilweise umspritzt ist, bzw. indem Ausnehmungen der Polscheibe 28 durchspritzt werden. Dadurch ist ein geringerer axialer Bauraum zu erzielen und die Montage des Hydraulikventils 1 wird vereinfacht. Die Polscheibe 28 dient als magnetischer Abschluss des magnetisierbaren Gehäuses 4, welches die Magnetspule 7 an dem Außenumfang 50 und an wenigstens einer Stirnseite 52 umschließt, auf der dem Hydraulikkolben 16 abgewandten Stirnseite 54 der Magnetspule 7. Die Polscheibe 28 kann als magnetisierbarer, beispielsweise scheibenförmiger oder ringförmiger, Körper mit Ausnehmungen für Kabeldurchführungen ausgestaltet sein, wobei die Ausnehmungen beispielsweise Bohrungen sein können.

Der Spulenkörper 8 schließt den Ankerraum 56 an einem Ende des Hydraulikventils 1 ab. Dabei bilden in den Ankerraum 56 hineinragende Vorsprünge 25 einen Anschlag für den Anker 10, so dass die hierdurch reduzierte Auflagefläche eine Antiklebwirkung aufweist.

Ein im Spulenkörpers 8 vorgesehenes Hydraulikfluid-Reservoir 26, welches bevorzugt einmalig initial gefüllt wird, steht in Verbindung mit dem Ankerraum 56 und verhindert einen Lufteintritt in das Hydraulikventil 1. Des Weiteren verhindert die Möglichkeit zur Verschiebung des Hydraulikfluids in das Reservoir 26 eine zusätzliche unerwünschte Dämpfung.
Das Reservoir 26 ist derart dimensioniert, dass die durch den Pinhub erfolgte Volumenverschiebung deutlich geringer ist als das Reservoirvolumen. Dadurch wird der Schmutzeintrag in den Ankerraum 56 reduziert.

Um einen durch Fremdkörper verursachten Kurzschluss zwischen einem nicht gezeigten Gabelstecker 35 und der Polscheibe 28 zu verhindern, weist das Hydraulikventil 1 ferner eine Spanschutzabdeckung 27 auf, welche mit Rippen die Polscheibe 28 abdeckt. Der Gabelstecker 35 ist ebenfalls teilweise im Spulenkörper 8 eingespritzt vorgesehen, so dass eine sichere Befestigung des Gabelsteckers 35 und damit auch eine sichere Kontaktierung gewährleistet werden kann.

Dass Sieb 100 überdeckt eine bzw. mehrere radiale P-Öffnungen 29 der Ventilbuchse 5, so das ein Schmutzeintrag in das Hydraulikventil 1 aus Richtung des Versorgungsanschlusses P sicher verhindert werden kann.

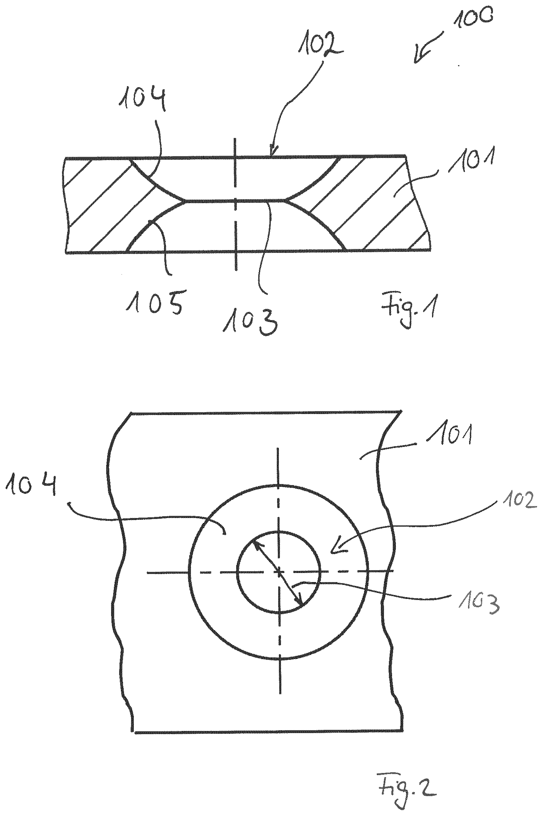

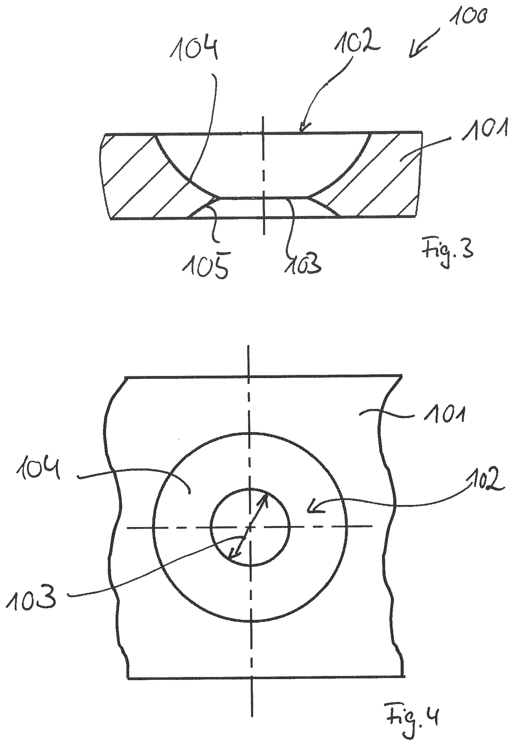

Den Fig. 1 bis 10 sind Ausschnitte von fünf Ausführungsbeispielen des Siebes 100 für ein Hydraulikventil zu entnehmen. Das Sieb 100 umfasst jeweils ein Bandblech 101 mit mehreren Sieböffnungen 102, welche geätzte Funktionskonturen bilden. Die Sieböffnungen 102 können dabei durch ein- oder beidseitiges Ätzen des Bandbleches 101 ausgebildet sein.

Im Gegensatz zu bekannten Sieben kann durch das Herstellungsverfahren Ätzen die Geometrie der Sieböffnungen 102 im Bandblech 101 entsprechend den speziellen Funktionsanforderungen der jeweiligen Hydraulikventile gezielt dargestellt und optimiert werden. Hierdurch erhält das Sieb 100 eine hohe Robustheit gegenüber Druckpulsationen und Druckstößen der hydraulischen Systeme.

Die Sieböffnungen 102 sind vorzugsweise als Blenden ausgebildet, so dass ein temperaturunabhängiger und gezielter Druckabfall bei der Durchströmung des Siebes 100 erzielt werden kann.

Wie den Ausführungsbeispielen zu entnehmen ist, sind die Sieböffnungen 102 ein- oder beidseitig kugelsegmentförmig mit einem ersten und einem zweiten Kugelsegment 104, 105 ausgebildet, wobei der kleinste Durchmesser der Sieböffnungen 102 einen Blendendurchmesser 103 bildet, wobei eine axiale Position der Blende variabel ist.

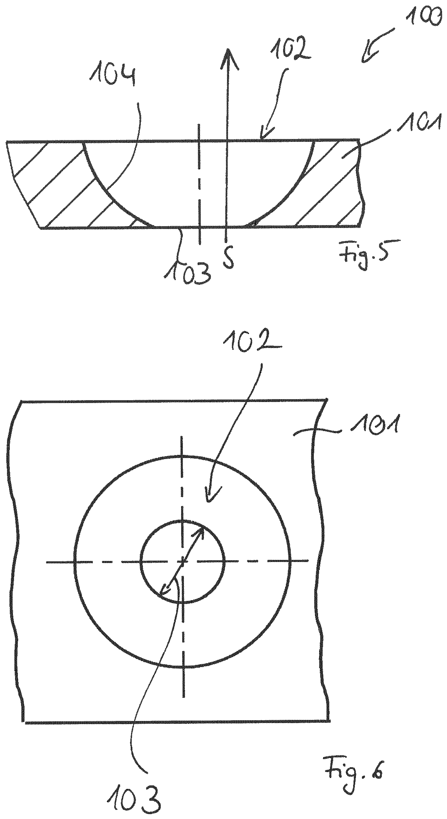

Ist die Blende nicht in der Mitte des Bandbleches 101 angeordnet, so ist das erste Kugelsegment 104 größer als das zweite Kugelsegment 105 ausgebildet. In diesem Fall fungiert das zweite Kugelsegment 105 der Sieböffnung 102 als Schmutzbarriere.
Das Gleiche gilt auch für die Ausführungsform gemäß den Fig. 5 und 6, bei welcher die Sieböffnungen 102 nur durch jeweils ein Kugelsegment 104 gebildet sind.

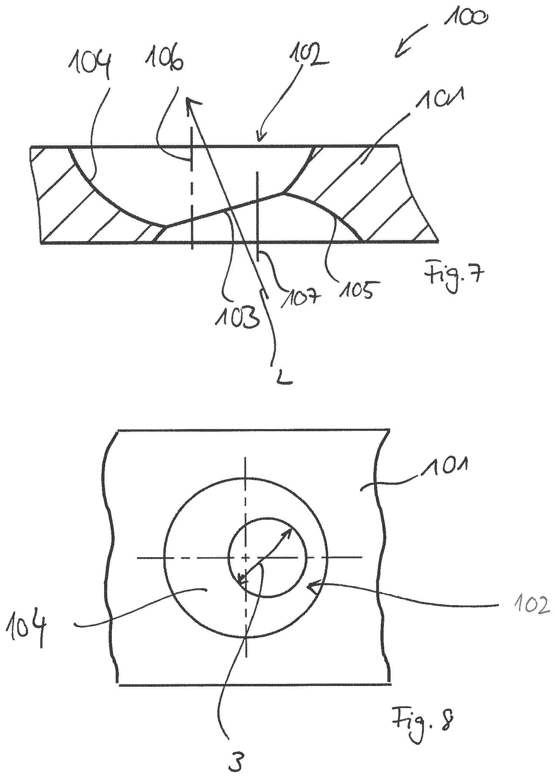

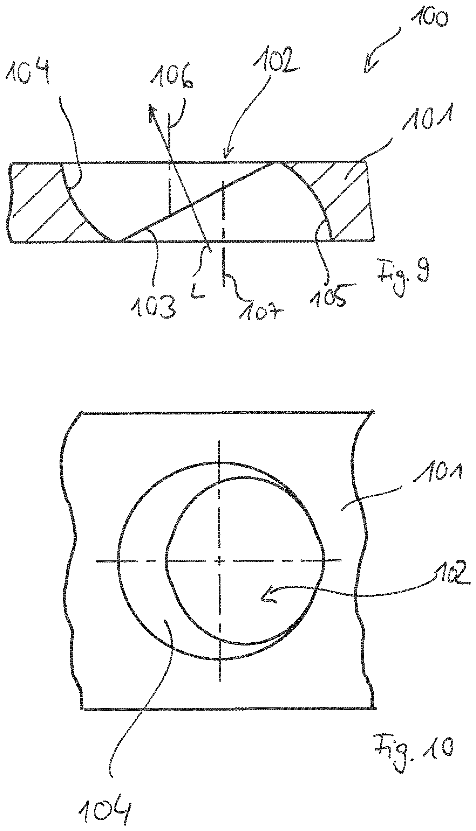

Sind Mittelachsen 106 und 107 der Kugelsegmente 104, 105 zueinander versetzt vorgesehen, kann neben der Blendenwirkung auch eine gezielte Strömungsleitung z.B. zur Vermeidung von Staudrücken, gerichteten Anströmung von Funktionsflächen anderer Komponenten etc. erzielt werden, wie mit dem Pfeil L in den Fig. 7 und 9 angedeutet ist.

Das Bandblech 101 der gezeigten Ausführungsformen kann als Bandsieb ausgebildet sein und direkt auf die Ventilbuchse 5 eines Hydraulikventils 1 angeordnet werden. Dabei können die Enden des Bandbleches 101 in einfacher Weise miteinander verschweißt werden.

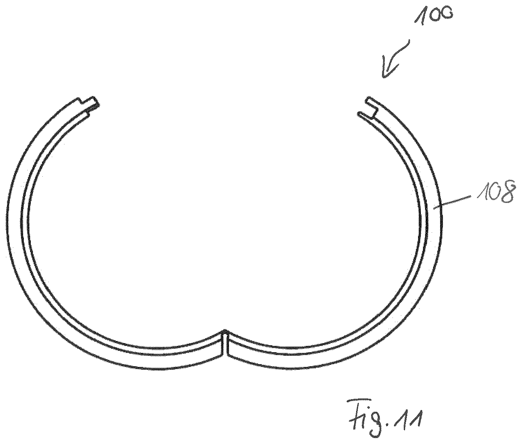

Das Bandblech kann jedoch auch in einen in Fig. 11 gezeigten Trägerrahmen 108 beispielsweise durch Einspritzen integriert werden, so dass das Sieb 100 als Clipsieb ausgebildet ist. Dabei kann das Material des Trägerrahmens 108 vorteilhafterweise wenigstens teilweise in die Kugelsegmente 104, 105 eingreifen, so dass das Sieb 100 sicher im Trägerrahmen 108 befestigt ist.

Die Anwendung des Siebes 100 ist nicht auf ein beschriebenes Getriebeventil beschränkt. So ist es im Rahmen der Erfindung ebenfalls denkbar, das Sieb 100 in einem sogenannten Cartridgeventil zur Verstellung eines Nockenwellenverstellers einzusetzen, um den Versorgungsanschluss P und/oder die Arbeitsanschlüsse A, B vor einem Schmutzeintrag zu schützen. Dabei kann das Cartridgeventil außerhalb des Nockenwellenverstellers angeordnet sein. Ebenso kann das Cartridgeventil aber auch innerhalb einer Rotornabe des Nockenwellenverstellers eingesteckt sein. Dabei handelt es sich dann umein sogenanntes Zentralventil.

## Patentansprüche

1. Hydraulikventil (1) mit einem Ventilkolben (13), der axial verschieblich in einer Ventilbuchse (3) geführt wird und mittels welchem wenigstens ein Arbeitsanschluss (A) wahlweise mit einem Versorgungsanschluss (P) und einem Tankabfluss (T) verbindbar ist, wobei wenigstens ein Anschluss (A, P) mittels eines Siebes (100) geschützt ist, wobei das Sieb ein Bandblech (101) mit geätzten Sieböffnungen (102) umfasst,
**dadurch gekennzeichnet, dass** die Sieböffnungen (102) geätzte Funktionskonturen bilden, welche durch ein- oder beidseitiges Ätzen des Bandbleches (101) ausgebildet vorgesehen sind, wobei die Sieböffnungen (102) als Blenden und ein- oder beidseitig kugelsegmentförmig : ausgebildet sind, und wobei der kleinste Durchmesser der Sieböffnungen (102) einen Blendendurchmesser (103) bildet.

2. Hydraulikventil (1) nach Anspruch 1, **dadurch gekennzeichnet, dass** die Sieblöcher (102) beidseitig kugelsegmentförmig ausgebildet sind und eine axiale Position der Blende variabel ist.

3. Hydraulikventil (1) nach einem der vorangegangenen Ansprüche, **dadurch gekennzeichnet, dass** die Sieböffnungen (102) als Schmutzbarriere ausgebildet sind.

4. Hydraulikventil (1) nach einem der vorangegangenen Ansprüche, **dadurch gekennzeichnet, dass** die Sieböffnungen (102) beidseitig als Kugelsegmente (104, 105) ausgebildet und Mittelachsen (106, 107) der Kugelsegmente (104, 105) zueinander versetzt vorgesehen sind.

5. Hydraulikventil (1) nach einem der vorangegangenen Ansprüche, **dadurch gekennzeichnet, dass** das Bandblech (101) als Bandsieb ausgebildet ist.

6. Hydraulikventil (1) nach einem der vorangegangenen Ansprüche 1 bis 5, **dadurch gekennzeichnet, dass** das Bandblech (101) in einem in der Ventilbuchse (3) angeordneten Trägerrahmen (108) angeordnet ist.

## Claims

1. Hydraulic valve (1) having a valve piston (13) which is guided axially displaceably in a valve liner (3) and by means of which at least one working connector (A) can be connected selectively to a supply connector (P) and a tank return (T), at least one connector (A, P) being protected by means of a screen (100), the screen comprising a sheet metal strip (101) with etched screen openings (102), **characterized in that** the screen openings (102) form etched functional contours which are provided in a manner which is configured by way of one-sided or two-sided etching of the sheet metal strip (101), the screen openings (102) being configured as orifices and in a spherical segment-shaped manner on one side or on both sides, and the smallest diameter of the screen openings (102) forming an orifice diameter (103).

2. Hydraulic valve (1) according to Claim 1, **characterized in that** the screen holes (102) are of spherical segment-shaped configuration on both sides, and an axial position of the orifice is variable.

3. Hydraulic valve (1) according to either of the preceding claims, **characterized in that** the screen openings (102) are configured as a dirt barrier.

4. Hydraulic valve (1) according to one of the preceding claims, **characterized in that** the screen openings (102) are configured on both sides as spherical segments (104, 105), and centre axes (106, 107) of the spherical segments (104, 105) are provided offset with respect to one another.

5. Hydraulic valve (1) according to one of the preceding claims, **characterized in that** the sheet metal strip (101) is configured as a strip screen.

6. Hydraulic valve (1) according to one of the preceding Claims 1 to 5, **characterized in that** the sheet metal strip (101) is arranged in a carrier frame (108) which is arranged in the valve liner (3).

## Revendications

1. Soupape hydraulique (1) comprenant un piston de soupape (13) qui est guidé de manière déplaçable axialement dans une douille de soupape (3) et au moyen duquel au moins un raccord de travail (A) peut être raccordé de manière sélective a un raccord d'alimentation (P) et a un écoulement de réservoir (T), au moins un raccord (A, B) étant protégé au moyen d'un crible (100), le crible comprenant une bande de tôle (101) avec des ouvertures de crible gravées (102),
**caractérisée en ce que** les ouvertures de crible (102) forment des contours fonctionnels gravés qui sont prévus et réalisés par gravure d'un côté ou des deux côtés de la bande de tôle (101), les ouvertures de crible (102) étant réalisées sous forme de diaphragmes et en forme de segment de sphere d'un côté ou des deux côtés, et le plus petit diamètre des ouvertures de crible (102) formant un diamètre de diaphragme (103).

2. Soupape hydraulique (1) selon la revendication 1,
**caractérisée en ce que** les trous du crible (102) sont réalisés en forme de segment de sphere des deux côtés et une position axiale du diaphragme est variable.

3. Soupape hydraulique (1) selon l'une quelconque des revendications précédentes, **caractérisée en ce que** les ouvertures de crible (102) sont réalisées sous forme de barrière antipoussière.

4. Soupape hydraulique (1) selon l'une quelconque des revendications précédentes, **caractérisée en ce que** les ouvertures de crible (102) sont réalisées des deux côtés sous forme de segment de sphere (104, 105) et des axes médians (106, 107) des segments de sphere (104, 105) sont prévus de manière décalée l'un par rapport à l'autre.

5. Soupape hydraulique (1) selon l'une quelconque des revendications précédentes, **caractérisée en ce que** la bande de tôle (101) est réalisée sous forme de crible en bande.

6. Soupape hydraulique (1) selon l'une quelconque des revendications précédentes 1 à 5, **caractérisée en ce que** la bande de tôle (101) est disposée dans un cadre de support (108) disposé dans la douille de soupape (3).
